Europäisches Patentamt

European Patent Office

Office européen des brevets

(11) Publication number: **0 049 158**
**B1**

# EUROPEAN PATENT SPECIFICATION

(45) Date of publication of patent specification: 02.09.87

(51) Int. Cl.⁴: **G 06 F 13/42,** G 06 F 15/16

(21) Application number: 81304501.0

(22) Date of filing: 29.09.81

(54) I/O data processing system.

(30) Priority: 29.09.80 US 192126

(43) Date of publication of application:
07.04.82 Bulletin 82/14

(45) Publication of the grant of the patent:
02.09.87 Bulletin 87/36

(84) Designated Contracting States:
BE CH DE FR GB IT LI NL SE

(56) References cited:
EP-A-0 010 135
US-A-3 670 306
US-A-4 056 843
US-A-4 184 200
IBM TECHNICAL DISCLOSURE BULLETIN, vol.
21, no. 2, July 1978, pages 786-787, New York,
USA; R.H.BURMESTER et al.: "Interrupt
protocol for interconnected microprocessors"
IBM TECHNICAL DISCLOSURE BULLETIN, vol.
22, no. 1, June 1979, pages 251-254, New York,
USA; P.DZUGANet al.: "Buffer for
asynchronous communication of mainteance
logout functions and messages"

(73) Proprietor: Honeywell Information Systems Inc.
200 Smith Street
Waltham County of Middlesex, Massachusetts
02154 (US)

(72) Inventor: Yu, Kin C.
32 Westwood Street
Burlington Massachusetts 01803 (US)
Inventor: Goss, Gary J.
93 Harris Street
Acton Massachusetts 01720 (US)

(74) Representative: Geissler, Bernhard, Dr. Patent-
und Rechtsanwälte et al
Bardehle-Pagenberg-Dost- Altenburg-
Frohwitter & Partner Postfach 86 06 20
D-8000 München 86 (DE)

## Description

This invention relates generally to a data processing system in a communications environment, and more specifically to communication multiplexers.

Data processing systems are coupled to a multiplicity of communication lines by a communication controller, commonly called a communication multiplexer. Each of the communication lines is coupled to a device such as a cathode ray tube display (CRT). The communication controller is operative to transfer data between a main memory of the data processing system and the devices via the communication line. A data processing system of this kind is described e.g. in US—A—4 056 843.

Known communication multiplexers include a first processor for effecting the assembling of data bits from a plurality of communication lines and a second processor for effecting the transfer of data characters between the first and the data processor subsequent to the receipt of one or more special control characters. This had the problem of limiting the throughput and requiring extensive hardware, since the single bit processor was required to assemble the bits into bytes by comparing the bits received from each line with a special stored character.

The hardware required can be reduced by the use of a microprocessor controlling communication lines through the use of channel control blocks stored in a shared memory. Such a system, however, limited the throughput by restricting the number of communication lines that could be processed.

Communication between microprocessors interconnected via a shared memory can be coordinated by an interrupt protocol as described in IBM Technical Disclosure Bulletin, July 1978, pages 786—787.

It is a primary object of the invention to provide an improved communication subsystem for use in a data processing system.

Accordingly, the present invention provides a data processing system for transferring data units between a system memory and a plurality of input/output devices, wherein a communication controller coupled to said system memory by a system bus and said devices by a common communication line controls the transfer of data units between said bus and said line in order to effect transfer of data units between said system memory and said devices, said communication controller characterized by:

a first microprocessor for controlling the receipt from and transmission onto said bus of data units for reading from and writing into said system memory;

a second microprocessor for controlling the receipt from and transmission onto said line of data units for input from and output to said devices;

an addressable shared store having at least one mailbox (mailbox 3) therein for enabling exchange of information between said microprocessors, said mailbox comprising a location (word 2) for holding a data unit and a location (F-bit, word 1) for a flag;

coupling circuits coupling said first and second microprocessors to said shared store to enable each of said microprocessors to write data units and other information therefrom;

an interrupt circuit coupled between said first and second microprocessors to enable said second microprocessor to interrupt and first microprocessor;

said second microprocessor comprising a circuit for transmitting an interrupt signal through said interrupt circuit when said second microprocessor requires said first microprocessor to transfer a data unit between said system memory and said mailbox;

said first microprocessor comprising a circuit responsive to said interrupt signal to perform an operation to transfer a data unit between said system memory and said mailbox and to set said flag to a particular state; and

wherein said second microprocessor from time to time reads said flag and, when the state of said flag denotes the completion of responsive action by said first microprocessor, completes the operation as required following the action of said first microprocessor as denoted by said flag.

A data processing system embodying the invention will now be described, by way of example, with reference to the drawings, in which:

Figure 1 is a block diagram of the data processing system.

Figure 2 is a block diagram of the communication controller 10.

Figure 3 is a logic diagram of the I/O microprocessor 36 and line microprocessor 56 interrupt logic.

Figure 4 identifies the address locations of the read only memories and the random access memories in communication controller 10.

Figure 5 shows the layout of the mailboxes in shared memory 44.

Figure 6 is a flow diagram showing the I/O microprocessor 36 and line microprocessor 56 in a typical operation.

Introductory summary

The data processing system includes a central processing unit 2, a main memory 4 and a communication subsystem 8, all coupled to a system bus 16. The communication subsystem 8 includes a communication controller 10 and a number of line adapters 12, 14 for coupling a number of devices 18—24 via communication lines to the communication controller.

The communication controller includes a line side and an I/O side. The line side is coupled to a shared memory 44 by a line address bus 70 and a line data bus 72. The I/O side is coupled to the shared memory by an I/O address bus 68 and an I/O data bus 74. The line side controls the transfer of data between the line adapters and shared

memory and the I/O side controls the transfer of data between the shared memory and main memory or the central processing unit.

In a typical operation, an area in shared memory called a mailbox may be loaded by the line side with a data byte from one of the devices and the channel number of the device. The I/O side will transfer the data byte stored in the mailbox and a main memory address stored in a channel control block in shared memory to main memory via the system bus. If the device requires a data byte, the line side loads the mailbox with the channel number. The I/O side transfers a main memory request to main memory via the system bus, receives the data byte from main memory and stores the data byte in the mailbox. The line side transfers the data byte from the mailbox to the requesting device.

A line microprocessor 56 controls the operation of the line side and an I/O microprocessor 36 controls the operation of the I/O side. Signals from the line adapters, in response to a poll, cause the line microprocessor to interrupt its operation to service the requesting device, store the information in the mailbox and set a flag bit in the mailbox. The line microprocessor then generates signals to interrupt the I/O microprocessor. The I/O microprocessor transfers the information to main memory, loads a response into the mailbox, and resets the flag bit. The line microprocessor tests the flag bit and processes the information in the mailbox when the flag bit is reset indicating that the I/O microprocessor has completed the I/O side operation.

Detailed description

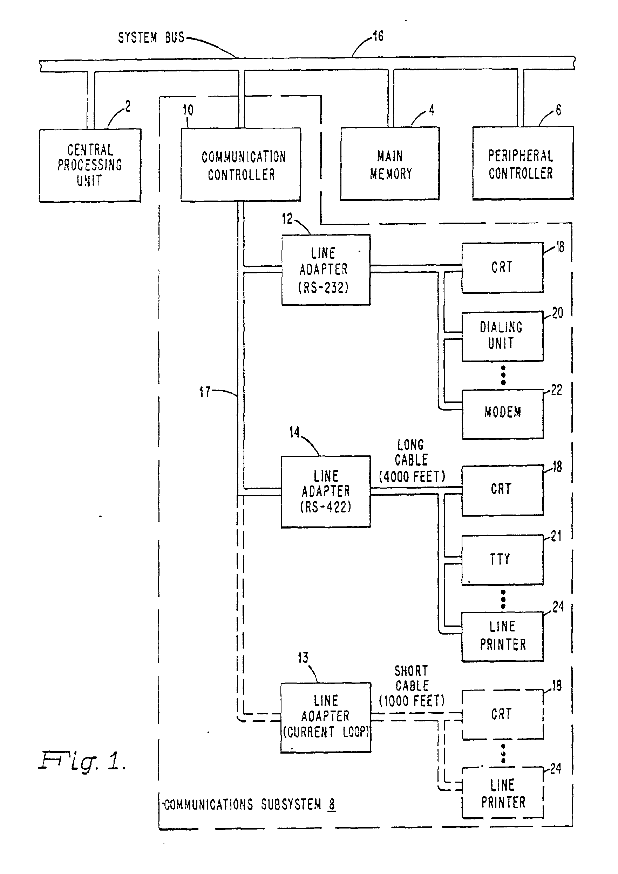

Figure 1 is a block diagram of the overall data processing system including a central processing unit (CPU) 2, a main memory 4, a communication subsystem 8 and a peripheral controller 6, all coupled to a system bus 16.

The communication subsystem 8 may be operative with a maximum of 16 communication lines and includes a communication controller 10 coupled to system bus 16, and a plurality of line adapters with their associated devices coupled to the communication controller 10 by a line adapter bus 17. The subsystem 8 includes a line adapter 12 having RS232 interfaces and a line adapter 14 having RS422 interfaces; either of these may be replaced by a line adapter 13 having current loop interfaces. Line adapters 13 and 14 may each service up to eight asynchronous lines; line adapter 12 may service up to eight asynchronous lines or up to six asynchronous lines and one synchronous line. However, only two line adapters servicing a maximum of 16 lines may be included in the communication controller 10.

Devices operative with the communication controller 10 include cathode ray tube displays (CRT) 18, a dialing unit (801C) 20, a MODEM (202C) 22, a teletype unit (TTY33) 21, and a line printer 24.

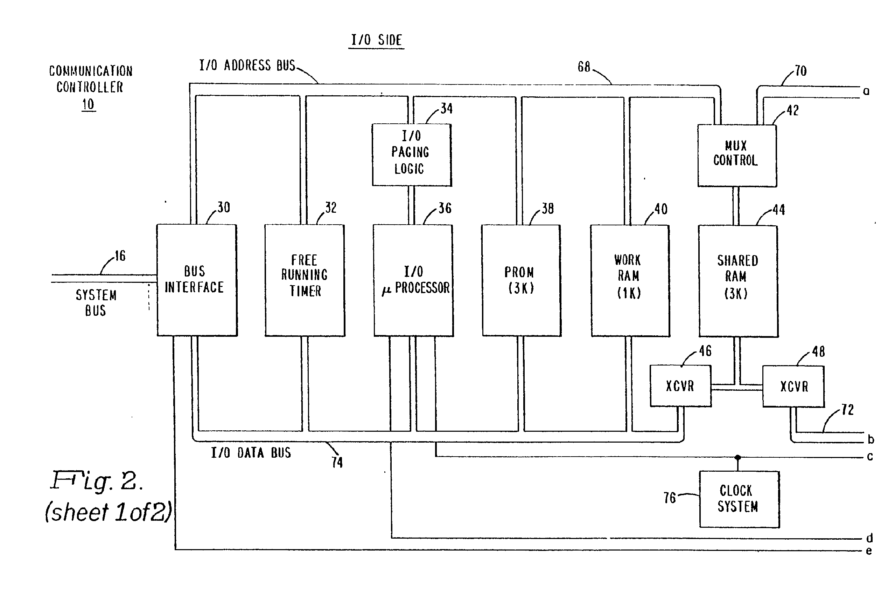

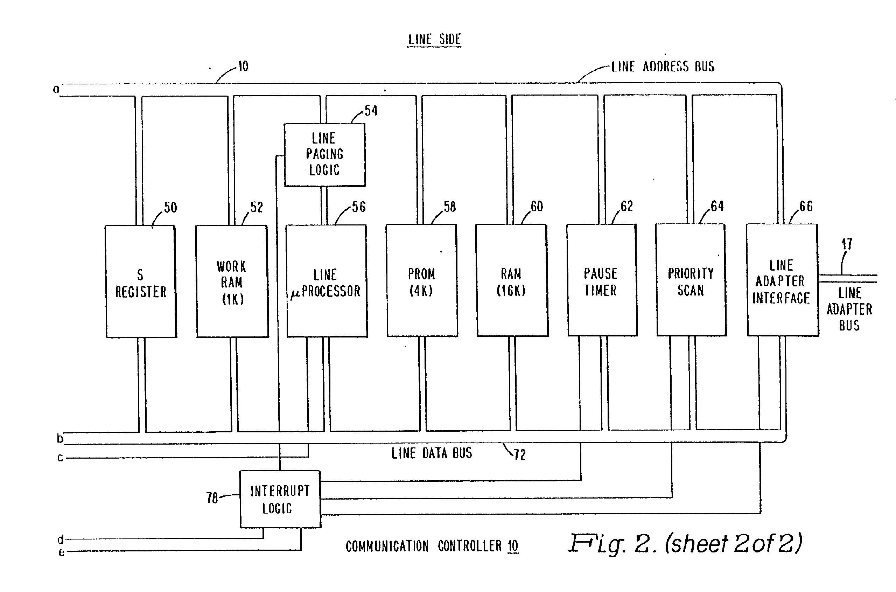

Figure 2 is a block diagram of communication controller 10 which includes an I/O microprocessor 36 which controls the operation of the communication controller 10 with CPU 2 and main memory 4 over system bus 16, and a line microprocessor 56 which controls the operation of the communication controller 10 with the line adapters 12 and 14 over line adapter bus 17.

The I/O microprocessor 36 and the line microprocessor 56 communicate with each other through a shared random access memory (RAM) 44 which stores the line control tables (LCT) and communication control blocks (CCB) and a number of mailboxes. Each of the devices is assigned an LCT. Half of the LCT controls the device in a receive mode and the other half of the LCT controls the device in a transmit mode. Similarly, each of the devices is assigned a CCB for each receive block transfer with main memory 4, and a CCB for each transmit block transfer with main memory 4.

Line control tables include the number of bits in the device data character's length, whether the characters have odd or even parity, the cycle redundancy check (CRC) formula used and the CRC bytes being developed, the status of the device, and pointers to enable the LCT to be operative with a channel control program (CCP).

The CCB stores the main memory 4 address location for the next character either transmitted or received, and the number of characters remaining for processing in the current block. The CCB also stores a control word indicating the last block for transmission, if the CCB was executed, and whether to generate and interrupt upon completion of a block, and a number of status bits indicating the line status at the time the CCB is completed. Up to four receive CCB's and up to four transmit CCB's may be stored per device.

A programmable read only memory (PROM) 38 stores the programs that operate with the I/O microprocessor 36. The I/O microprocessor generates signals indicative of an address location in PROM 38 and sends the signals via an I/O paging logic 34 and I/O address bus 18 to PROM 38. An instruction at that address location is transferred from PROM 38 to the I/O microprocessor 36 via an I/O data bus 74. The I/O microprocessor 36 executes that instruction and generates the address signals indicating the next address location of PROM 38 to read the next instruction over I/O data bus 74.

A work RAM 40 operates with the I/O microprocessor 36 as a scratchpad memory for storing variable data, for stack operation, i.e., storing the return address of an interrupted microprogram, and for providing working storage for data manipulation.

The I/O paging logic 34 receives a virtual address from I/O microprocessor 36 when the I/O microprocessor addresses the LCT or CCB area of shared memory 44 and generates a read address for identifying a location within the LCT or CCB area of a particular channel associated with a selected device.

A bus interface 30 couples the communication controller 10 to the system bus 16 for operation with main memory 4 and CPU 2, and operates with bus request, bus acknowledge, and bus priority operations of known type. Bus interface 30 also provides storage for data and I/O commands that are transferred over system bus 16.

A RAM 60 stores the channel control program (CCP) which processes the data stream of a communication channel. A CCP pointer in the LCT points to the next CCP location in RAM 60 to be referenced by the channel when a channel request interrupt is service. The CCP typically controls the transfer of characters between a line adapter interface 66 and shared RAM 44 through line microprocessor 56 and performs the check redundant character computation and minor editing.

A PROM 58 stores the programs that operate with the line microprocessor 56. The line microprocessor 56 generates address signals indicating an address location in PROM 58 and sends the address signals via a line paging logic 54 and a line address bus 70 to PROM 58. AN instruction at that address location is transferred from PROM 58 to line microprocessor 56 via a line data bus 72. The line microprocessor 56 executes that instruction and generates the address signals indicating the next address location of PROM 58 to read the next instruction over line data bus 72.

A work RAM 52 operates as a scratchpad memory for line microprocessor 56 as does work RAM 40 for I/O microprocessor 36.

Line paging logic 54 receives a virtual address which is converted into a real address when addressing the LCT or CCB area in shared RAM 44. As with I/O paging logic 34, line paging logic 54 allows a single program to address the LCT or CCB associated with any communication channel (2 channels per line: a receive channel and a transmit channel).

An S register 50 is a one byte index register which is operative with PROM 58.

A pause timer 62 detects if a CCP is running too long by counting the number of accesses to RAM 60. If the number of accesses exceeds a predetermined number, typically 100, the line microprocessor 56 is interrupted, the CCP is temporarily deactivated, and a CCP return address is stored in a queue in work RAM 52.

A priority scan 64 accepts data requests associated with each channel of the device adapters and establishes the priorities for servicing the channels in a suitable sequence.

A line adapter interface 66 couples the line adapters 12 and 14 to the communication controller 10 through line adapter bus 17.

The I/O microprocessor 36 implements a number of functions including handling of I/O instructions from the CPU 2 to the communication controller 10 and controlling the transfer of data betweeen line microprocessor 56 and main memory 4. Line microprocessor 56 in conjunction with PROM 38 acts as an interpreter of the CCP. When a CCP instruction which requests a byte to be transferred to/from main memory 4 is decoded by line microprocessor 56, it stores the number of the channel currently being serviced and the data byte (if the transfer is to main memory) in the mailbox in shared memory 44. The line microprocessor 56 generates an interrupt through an interrupt logic 78 to the I/O microprocessor 36. The I/O microprocessor 36 in conjunction with PROM 38 will address the mailbox in shared RAM 44 for the channel number and command code (and the data byte if this is a receive operation) and address the current CCB of this channel via I/O paging logic 34 for the current main memory address. The I/O microprocessor 36 will transfer the address and data byte to bus interface 30 where the main memory 4 address and data byte are stored, awaiting an acknowledge in response to a bus request, for transfer to main memory 4.

Interrupt logic 78 is also responsive to signals from bus interface 30 to interrupt the I/O microprocessor to accept system bus 16 information addressed to communication controller 10. The logic 78 is also responsive to a signal from pause timer 62 to interrupt line microprocessor 56 when the number of CCP instructions exceeded the predetermined number; a signal from priority scan 64 to interrupt line microprocessor 56 to start a polling of the devices; and a signal from line adapter 66 to interrupt the line microprocessor 56 when a device responds to the poll.

The I/O microprocessor 36, in conjunction with a free running timer 32, may indicate to the line microprocessor 56 that it is to start a predetermined operation after a time delay determined by the line microprocessor 56.

A clock system 76 generates the phase 1 and phase 2 clock signals for I/O microprocessor 36 and line microprocessor 56 as well as a number of timing signals which are described.

The I/O microprocessor 36 when receiving an I/O command from CPU 2 may generate an I/O instruction to line microprocessor 56 through a mailbox in shared memory 44 in order to control the CCP stored in RAM 60.

A transceiver (XCVR) 46 and an XCVR 48 isolate the I/O data bus 74 from the line data bus 72. Similarly, a MUX and control 42 isolates the I/O address bus 68 from the line address bus 70 and couples shared RAM 44 to either I/O address bus 68 or line address bus 70.

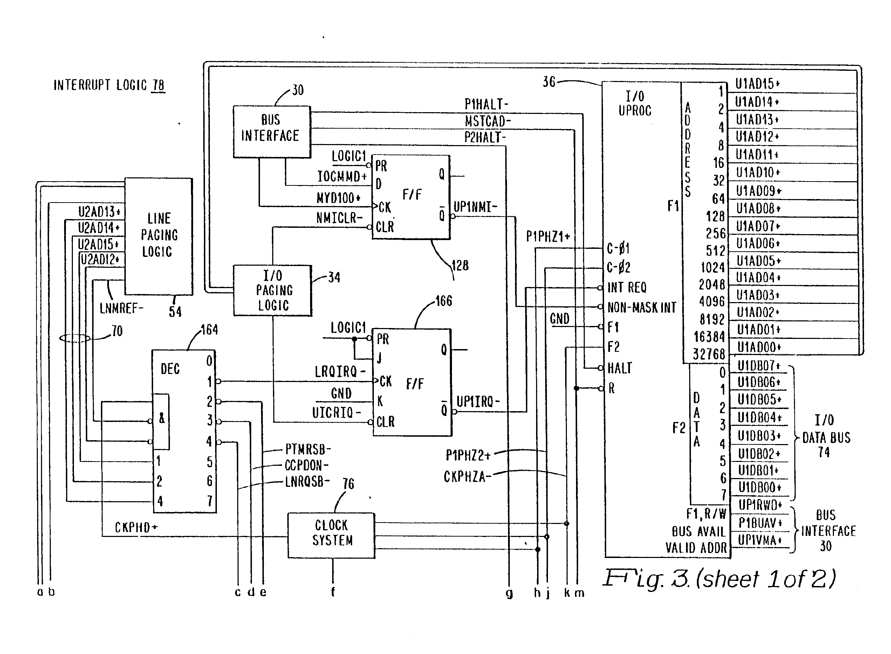

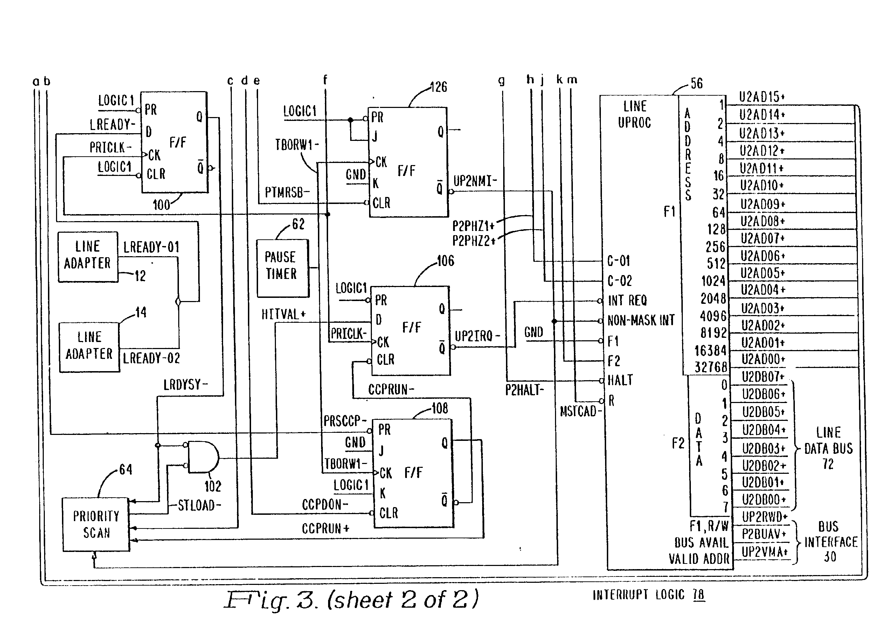

Figure 3 shows the interrupt logic 78 in detail, together with some of the surrounding units. A signal LREADY−01 or LREADY−02 at 0 indicates that a device on a communication line coupled to line adapter 12 or 14 requests service by responding to the poll by priority scan 64. Forcing signal LREADY− to 0 resets a flip-flop 100 on the rise of a clock signal PRICLK−. Output signal LRDYSY− at 0 is applied to an input of a NAND gate 102. Signal STLOAD−, the output of priority scan 64, is at 0 during the polling operation.

A flip-flop 106 is set on the next rise of clock, signal PRICLK− since the D input signal HITVAL+, the output of a NAND gate 102 is 1. This forces the output signal UP2IRQ− to 0, thereby forcing line microprocessor 56 into an interrupt sequence. Line microprocessor 56 generates addresses $FFF8_{16}$ and $FFF9_{16}$ on address lines U2AD00+00 to

U2AD15+00 through line paging logic 54 onto line address bus 70 and begins to process instructions stored in PROM 58 and CCP's stored in RAM 60. Signal PRSCCP— is forced to 0 by logic responsive to address signals $FFF8_{16}$ and $FFF9_{16}$ in line paging logic 54. This sets a flip-flop 108. Signal CCPRUN— at 0 resets flip-flop 106 and signals the priority scan 64 that the CCP is active. Interrupt signal UP2IRQ— is forced to 1.

The CCP's control the operation of the communication lines. Each instruction of the CCP calls for a program routine in PROM 62. Line microprocessor 56 performs the instructions of the program routine to perform the CCP instruction.

When the line microprocessor 56 has completed its operation with the communication line, it generates an address $OOF1_{16}$. Line paging logic 54 is responsive to this address and generates signal LNMREF— at 0. A decoder 164 is activated and signal LRQIRQ— is forced to 0. This sets a flip-flop 166 and output UP1IRQ— at 0 forces I/O microprocessor 36 into an interrupt mode.

I/O microprocessor 36 generates addresses $FFF8_{16}$ and $FFF9_{16}$. Signal UICRIQ— from I/O paging logic 34 is responsive to address $FFF8_{16}$ and resets flip-flop 166. The I/O microprocessor 36 is controlled by the program routine stored in PROM 38 to process data in accordance with command signals stored in the mailbox in shared memory 44 by line microprocessor 56.

A CPU 2 may control the communication controller 10 by sending I/O commands over system bus 16. These I/O commands set up the LCT's and CCB's or read the LCT's and CCB's. As an example, one input/output command will set the main memory 4 address in a CCB. Another input/output command will set the range in that CCB.

Bus interface 30 generates signal IOCMMD+ when an input/output command is received from CPU 2 over system bus 16. Output signal IOCMMD+ sets a flip-flop 128 on the rise of timing signal MYD1OO+ from bus interface 30. Interrupt signal UP1NM— at 0 is applied to the non-maskable interrupt input terminal of I/O microprocessor 36 which generates interrupt vector addresses $FFFC_{16}$ and $FFFD_{16}$. The input/output command includes a function code which modifies interrupt vector address $FFFC_{16}$ in the I/O paging logic 34 to point to an address location in PROM 38 which stores the starting address of the program which executes the input/output command specified by the function code. Interrupt vector address $FFFC_{16}$ generates signal NM1CLR— in I/O paging logic 34 to reset flip-flop 128.

A flip-flop 126 sets on the rise of the TBORW1— signal from pause timer 62 when the pause timer 62 times out. Interrupt signal UP2NMI— at 0 is applied to the non-maskable interrupt terminal of line microprocessor 56 which generates interrupt vector addresses $FFFC_{16}$ and $FFFD_{16}$. The contents of these address locations in PROM 58 generate a program address for processing the pause timer 62 time out. Flip-flop 126 is reset during a stop timer or a WAIT instruction when signal PTMRSB—, the output of decoder 164, is forced to 0.

A number of timing and control signals are applied to the input terminals of I/O microprocessor 36 and line microprocessor 56. Signals P1PHZ2+, P2PHZ1+ and P2PHZ2+ applied to the Ø1 and Ø2 terminals provide the basic timing. Signal CKPHZA— applied to the F2 terminal enables the data bus during a microprocessor write cycle and disables the data bus during a microprocessor read cycle. The signals P1HALT— and P2HALT— at 0 applied to the HALT terminal will halt the microprocessor after the instruction is executed. Signal MSTCAD— applied to the R terminal starts the microprocessor when power is turned on.

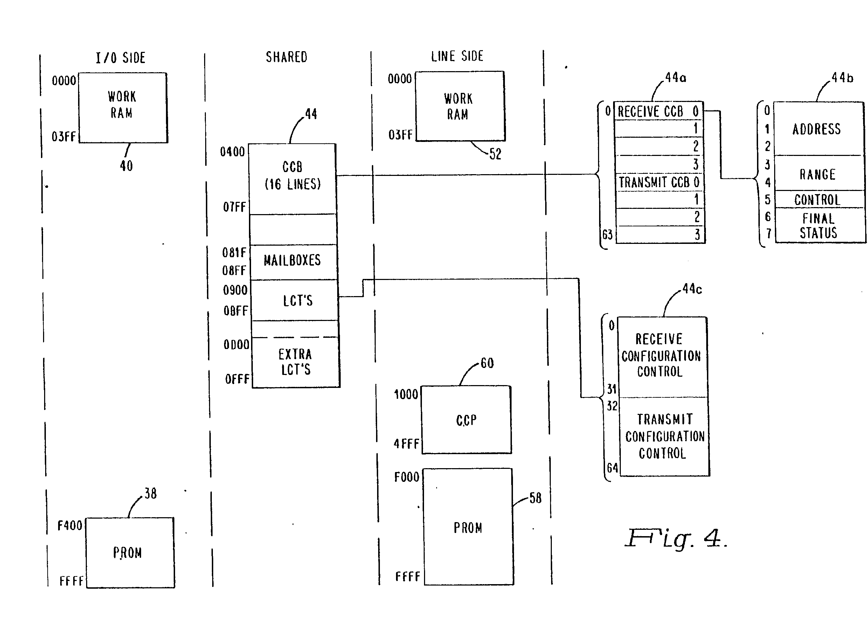

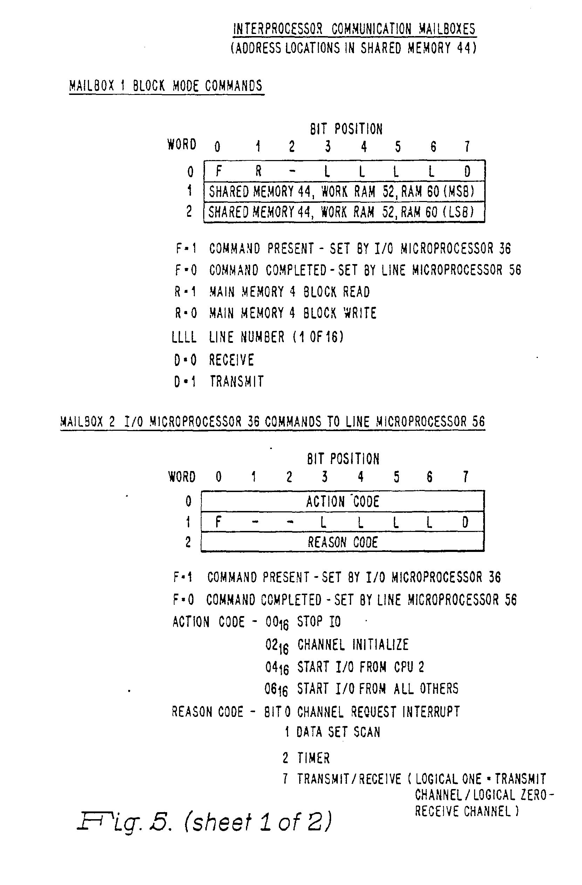

Figure 4 identifies the address locations of the various memories that are operative with either the I/O microprocessor 36 (I/O side), the line microprocessor 56 (line side), or both the I/O microprocessor 36 and the line microprocessor 56 (shared). Work RAM's 40 and 52 are responsive to address signals $OOOO_{16}$ to $O3FF_{16}$ received from I/O address bus 68 and line address bus 70 respectively.

Shared memory 44 is responsive to address signals $O4OO_{16}$ to $OFFF_{16}$ received from I/O address bus 68 or line address bus 70. Shared memory 44 has 3,072 address locations: 1,024 address locations for storing CCB's for 16 communication lines, 1,024 address locations for storing LCT's for 16 communication lines, 10 address locations for storing mailboxes, and the remaining address locations for storing extra LCT's. Each communication line is operative with CCB's 44a in 64 address locations: 32 address locations for the communication line as a receive channel and 32 address locations for the communication line as a receive channel and 32 address locations for the communication line as a transmit channel. Each receive channel CCB and each transmit channel CCB includes 8 bytes: 3 bytes of main memory 4 address location, 2 bytes of range, 1 byte of control and 2 bytes of status. Each LCT 44c includes 32 address locations of receive channel configuration and control information and 32 address locations of transmit channel configuration and control information.

RAM 60 includes 16,384 locations with addresses $1OOO_{16}$ to $4FFF_{16}$ for storing CCP instructions which are under the control of line microprocessor 56.

PROM 38 has 3,072 locations with addresses $F4OO_{16}$ to $FFFF_{16}$ for storing program instructions that operate with I/O microprocessor 36. PROM 58 has 4,096 locations with addresses $FOOO_{16}$ to $FFFF_{16}$ for storing program instructions that operate with line microprocessor 56.

Each channel has associated with it four 8 byte CCB's 44b, each including 3 bytes of main memory 4 address of the next data byte to be processed by that channel, 2 bytes of range, the number of data bytes remaining in the field, 1 control byte and 2 status bytes.

The CCB control byte includes an "interrupt on status complete" bit, a "valid CCB" bit, and a "last block" bit.

The CCB final status bytes include bits indicating:

Bit (0=most significant bit)
0 The CCP executes a CPU 2 interrupt instruction.
1 An interrupt was generated for this CCB.
2 Data Service Error.
3 CCB was executed and status is complete.
4 CCB Service Error since CCB not available.
5, 6 Flag between CCP and CPU 2.
9 Data Clock Error.
10 Range not equal to zero when in receive mode.
Last block bit of CCB control word set in transmit mode.
11 Date set status changed.
12 Memory 4 error corrected.
13 Invalid memory 4 address.
14 System bus 16 parity error.
15 Uncorrected memory 4 error.

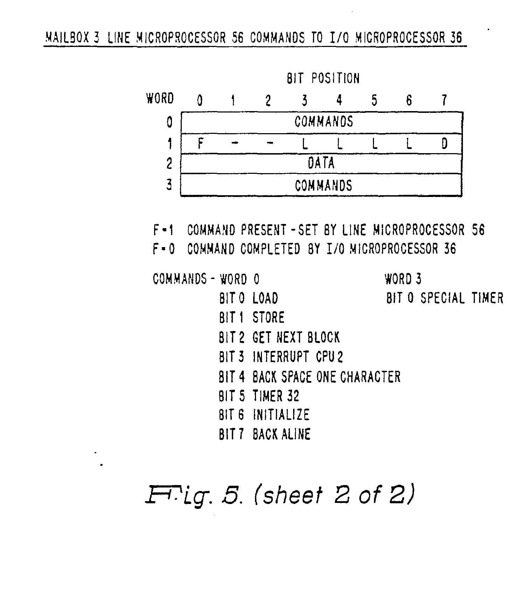

The I/O microprocessor 36 and line microprocessor 56 communicate with each other by means of mailboxes stored in locations in shared RAM 44. The contents of these mailbox locations are shown in Figure 5.

The communication controller 10 uses three mailboxes 1 to 3 for a) block mode commands, b) I/O microprocessor 36 commands to line microprocessor 56, and c) line microprocessor 56 commands to I/O microprocessor 36 respectively.

The CPU 2 may initiate a block read operation or a block write operation by means of I/O commands. As a result of the input/output command when the mailbox is available (F=0), the block mode command mailbox is set up with an address in the line microprocessor address space. This is the address of the first location to receive a byte from shared memory 44 if the D bit, bit 7 of word 0, is 0, or from which to transmit a byte to shared memory 44 if the D bit is 1.

Bits 3 to 6 of word 0 specify the channel number of the communication line requiring the block transfer. The CCB stored in shared memory 44 associated with that channel specifies the starting main memory 4 address and the range, the number of bytes in the block, involved, in the block transfer.

The R bit, bit 1 of word 0, when at 1 specifies a main memory 4 block read operation and when at 0 a main memory 4 block write operation.

The F bit, bit 0 of word 0, is set to 1 by I/O microprocessor 36 to specify that a command is present, and is reset to 0 by the line microprocessor 56 when the command is completed.

The line microprocessor 56 scans word 0 of block mode command mailbox. If bit 0 of word 0 is 1 then the line microprocessor 56 initiates a firmware routine which identifies the channel number and determines whether this is a read or a write operation. If this is a read operation, then the STORE subroutine is processed. If this is a write operation, then the LOAD subroutine is processed. When the range as stored in the CCB for this channel number reaches ZERO, the line microprocessor 56 resets the F bit, bit 0 of word 0, and terminates this block mode operation.

Mailbox 2, for I/O microprocessor 36 commands to line microprocessor 56, specifies the action the line microprocessor 56 is to take and the reason for the action.

Word 0 specifies the action code. Action code $00_{16}$ specifies a stop I/O command which prevents any further channel activity by halting the CCP program and preventing further data-generated channel request interrupts from the channel specified in word 1. Action code $02_{16}$ initializes the channel by clearing the CCB's and LCT's associated with the channel number specified in word 1. Action code $04_{16}$ starts the CCP execution at an address specified by the LCT words 6 and 7 associated with the channel specified in word 1. This LCT address is specified by CPU 2 initially by an I/O command. Action code $06_{16}$ starts the CCP execution as the result of an interrupt from a communication channel. The CC3 for that channel specifies the starting CCP address location.

Word 2 of mailbox 2 specifies the reason code. Bit 0 indicates a channel request interrupt. Bit 1 identifies a data set scan operation. The data scan routine compares the present status with the old status stored in LCT 14. A difference indicates that a particular channel status has changed. The contents of LCT 8 then determine the action the line microprocessor 56 will take. Bit 2 indicates that the timer 62 which was set by the CCP has timed out. Bit 7 indicates the direction of the line, receive or transmit.

The line microprocessor 56 reads the F bit of word 1. When bit 0 is 1, the line microprocessor 56 reads word 0 and branches to a subroutine specified by the action code. Bit 0 of word 1 is reset to 0 when the action is completed.

Mailbox 3, for line microprocessor 56 commands to I/O microprocessor 36, is active during a request by a line adapter 12 or 14 for service, causing the line microprocessor 56 to start the processing of the CCP instruction specified by the commands stored in the mailbox 3.

Bit 0 of word 0 of mailbox 3 at 1 specifies a load (DMA read) from main memory 4 command at an address specified by the CCB of the channel number stored in word 1 of mailbox 3. The data bytes read from memory are stored in word 2 of mailbox 3. Line microprocessor 56 processes the data bytes in accordance with the CCP as each data byte is stored in the mailbox under control of the I/O microprocessor 36.

Bit 1 of word 0 at 1 specifies a store (DMA write) into main memory 4 at an address specified by the CCB of the channel number stored in word 1. The data bytes are stored in word 2 of the mailbox 3 under control of line microprocessor 56 and transferred to main memory 4 via system bus 16 under control of I/O microprocessor 36. Bit 2 of word 0 at 1 specifies a get next block (GNB) command. This indicates to the I/O microprocessor 36 that the block transfer is complete and to clear the CCB control field. Bit 3 of word 0 at 1 results in the I/O microprocessor 36 interrupting CPU 2 and in conjunction with bit position 2 at 1 (GNB) will result in an I/O command from the CPU 2 loading the CCB for another block transfer. Bit 4 of word 0 at 1 indicates a backspace one character operation. A CRT 18 operator may want to correct a character. Bit 5 of word 0 at 1 indicates that the timer 32 is in an "ON" condition. Bit 6 of word 0 at 1 indicates an initialize operation. Bit 7 of word 0 at 1 indicates the backing up of a line. The CRT 18 operator may want to correct a line.

Bit 0 of word 3 indicates a special 200 ms pause timer 62 operation.

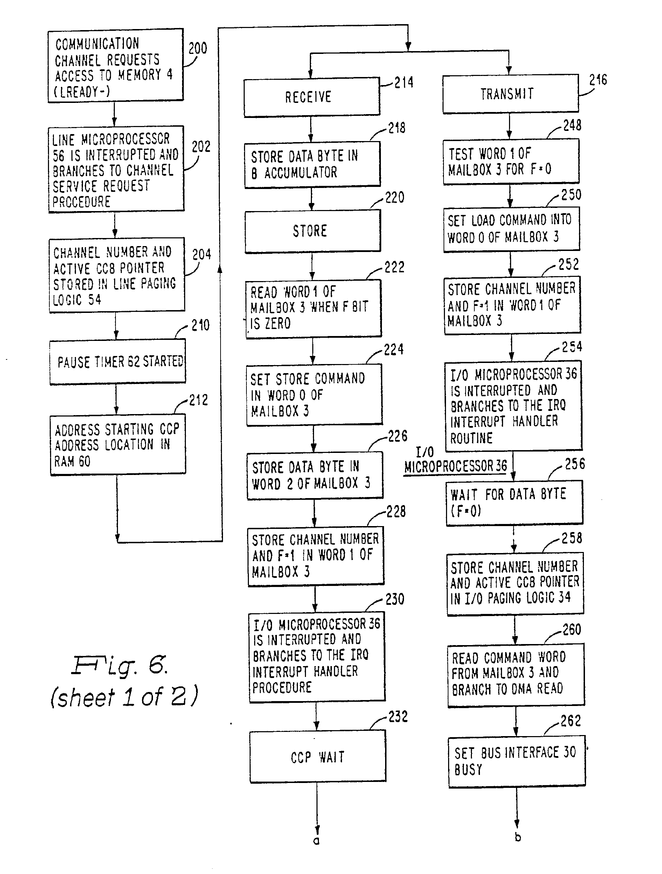

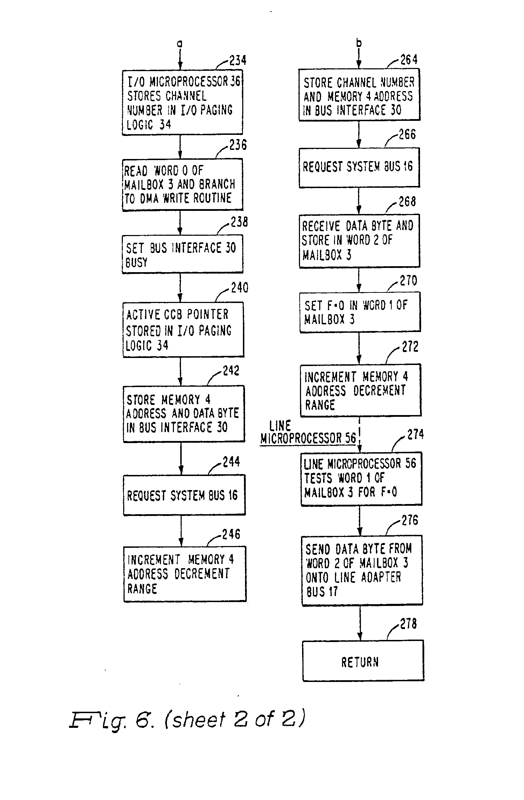

Figure 6 is a flow diagram showing the transfer of a data byte from a communications device, typically a CRT 18, via line adapter bus 17, figure 2, communication controller 10 to memory 4 via system bus 16; and from main memory 4, via system bus 16, communication controller 10, via line adapter bus 17 to CRT 18.

The line adapter 12 or 14 generates signal LREADY−01 or signal LREADY−02, figure 3, which is wire OR'd to generate signal LREADY− (block 200). This sets flip-flop 106 which generates signal UP2IRQ− thereby interrupting line microprocessor 56 (block 202). Line microprocessor 56 generates interrupt vector addresses $FFF8_{16}$ and $FFF9_{16}$. The contents of addresses $FFF8_{16}$ and $FFF9_{16}$ in PROM 58 point to a Channel Request Service Routine stored in PROM 58.

In block 204, the channel number including the D bit, indicating if this is a receive or transmit operation, is stored in a register (not shown) in line paging logic 54 along with the active CCB pointer which selects one of 4 CCB's 44a (figure 4). The channel number and active CCB pointer are used by the line paging logic 54 to convert a virtual address from line microprocessor 56 pointing to a particular LCT or CCB for all 65 communication channels stored in shared memory 44 to a read address pointing to the LCT or CCB for the one requesting channel stored in shared memory 44. A count of $FF_{16}$ stored in pause timer 62 by line microprocessor 56 (block 210) starts monitoring the duration of the CCP. In block 212, the starting CCP location in RAM 60 which is stored in an LCT associated with the requesting communication channel is addressed.

We assume first that the channel number indicates a receive operation (block 214); that is, the communication controller 10 will receive a data byte from CRT 18 and load the data byte in the B accumulator of line microprocessor 56 (block 218). A CCP store instruction is called from RAM 60 (block 220) and when the F bit of word 1 of mailbox 3 equals 0 (block 222) command $40_{16}$ is stored in word 0 (block 224), the data byte is stored in word 2 (block 226), and the channel number and the F bit set to 1 in stored in word 1 of mailbox 3 (block 228).

In block 230, line microprocessor 56 generates address $00F1_{16}$ setting flip-flop 166 and thereby generating the I/O microprocessor 36 interrupt signal UP1IRQ−, Figure 3. The I/O microprocessor 36 generates interrupt vector addresses $FFF8_{16}$ and $FFF9_{16}$ in response to the signal UP1IRQ−. The locations specified by the interrupt vector address store the starting address in PROM 38 of the IRQ Interrupt Handler routine. The line microprocessor 56 calls for a CCP WAIT instruction (block 232), which causes the line microprocessor 56 to suspend operation until the next communication channel interrupt signal LREADY−01 or LREADY−02 is generated.

The I/O microprocessor 36 (block 234) stores the channel number read from word 1 of mailbox 3 into I/O paging logic 34. In block 236, the I/O microprocessor 36 reads the command word in mailbox 3, $40_{16}$, indicating a store operation and branches to a DMA WRITE routine in PROM 38.

The bus interface 30 (block 238) is set to give a busy response to any system bus 16 request of communication controller 10. The active CCB pointer is stored in a register (not shown) in I/O paging logic 34 (block 240) and in conjunction with the channel number converts virtual addresses into real addresses.

The I/O microprocessor 36 stores (block 242) the main memory 4 address from CCB 44b, Figure 4, and the data byte from word 2 of mailbox 3 in registers (not shown) in bus interface 30. I/O microprocessor 36 generates address $00F7_{16}$ (Block 244) to request system bus 16 for the transfer of the main memory 4 address and data byte stored in bus interface 30 to main memory 4 for writing the data byte in the specified address location. The main memory 4 address is incremented and the range decremented (block 246) and written into the CCB of the requesting communication channel. The address indicates the main memory 4 address location into which the next data byte from the requesting communication channel is written. The range, which indicates the number of data bytes remaining to be transferred to main memory 4, is tested for "equal to ZERO" in conventional manner.

If the CRT 18 was requesting a data byte from main memory as indicated by the channel number (D bit), then block 212 would call for a transmit operation in the form of a CCP LOAD instruction (block 216).

The line microprocessor 56 (block 248) tests the flag bit F for 0 (indicating that the I/O microprocessor 36 has completed a previous operation) and sets the load command $80_{16}$ into the command word 0 of mailbox 3 (block 250). The channel number and flag bit F set at 1 are stored in word 1 of mailbox 3 (block 252).

The I/O microprocessor 36 is interrupted and branches to the IRQ Interrupt Handler Routine in block 254 as described above; meanwhile the line microprocessor 56 waits for the data byte by testing the flag bit F of word 1 of mailbox 3 for 0 (block 256).

The I/O microprocessor 36 (block 258) stores the active CCB pointer and the channel number in

I/O paging logic 34, reads the command word ($80_{16}$) from word 0 of mailbox 3 (block 260) and branches to a DMA READ routine in PROM 38.

The bus interface 30 is set to give a busy response to a system bus 16 request (block 262). The I/O microprocessor 36 stores the channel number from word 1 of mailbox 3 and the main memory 4 address from the CCB in bus interface 30 registers (not shown) (block 264) and (block 266) requests system bus 16 by generating address $00F7_{16}$ for the transfer of channel number and address to main memory 4 over system bus 16.

The data byte is received by the I/O microprocessor 36 and stored in word 2 of mailbox 3 (block 268). The flag bit F is set to 0 in work 1 of mailbox 3 (block 270) which indicates to the line microprocessor 56 that the data byte is stored in the mailbox 3. The main memory 4 address is incremented and the range decremented (block 272) for storage in the CCB of the requesting CRT 18.

Line microprocessor 56 tests word 1 for flag bit F equal to 0 (block 274) and (block 276) sends the data byte from word 2 of mailbox 3 out on line adapter bus 17 to CRT 18. In block 278, the line microprocessor 56 returns to the main program.

## Claims

1. A data processing system transferring data units between a system memory (4) and a plurality of input/output devices (18—24), wherein a communication controller (10) comprising an addressable shared store (44) and coupled to said system memory by a system bus (16) and said devices by a common communication line (17) controls the transfer of data units between said bus and said line in order to effect transfer of data units between said system memory and said devices, said communication controller characterized by:

a first microprocessor (36) for controlling the receipt from and transmission onto said bus of data units for reading from and writing into said system memory;

a second microprocessor (56) for controlling the receipt from and transmission onto said communication line for input from and output to said devices;

the addressable shared store (44) having at least one mailbox (mailbox 3) therein for enabling exchange of information between said microprocessors, said mailbox comprising a location (word 2) for holding a data unit and a location (F-bit, word 1) for a flag;

coupling circuits (34, 68, 42, 46, 74, 54, 70, 48, 72) coupling said first and second microprocessors to said shared store to enable each of said microprocessors to write data units and other information therefrom;

an interrupt circuit (78) coupled between said first and second microprocessors to enable said second microprocessor to interrupt said first microprocessor;

said second microprocessor comprising a circuit for transmitting an interrupt signal through said interrupt circuit when said second microprocessor requires said first microprocessor to transfer a data unit between said system memory and said mailbox;

said first microprocessor comprising a circuit responsive to said interrupt signal to perform an operation to transfer a data unit between said system memory and said mailbox and to set said flag to a particular state; and

wherein said second microprocessor from time to time reads said flag and, when the state of said flag denotes the completion of responsive action by said first microprocessor, completes the operation as required following the action of said first microprocessor as denoted by said flag.

2. The communication controller of claim 1, characterized in that said second microprocessor, prior to transmitting said interrupt signal, enters into said mailbox information denoting the direction of transfer of said data unit.

## Patentansprüche

1. Ein Datenverarbeitungssystem, in welchem Daten zwischen einem Systemspeicher (4) und einer Mehrzahl von Eingabe-/Ausgabegeräten (18—24) übertragen werden und worin eine Kommunikationskontrolleinrichtung (10) mit einem adressierbaren Gemeinschaftsspeicher (44) vorhanden und mit dem Systemspeicher mittels einer Systembusleitung (16) und mit den genannten E/A-Geräten mittels einer gemeinsamen Kommunikationsleitung (17) verbunden ist, und wobei die genannte Kommunikationskontrolleinrichtung den Datentransfer zwischen der Systembusleitung und der Kommunikationsleitung steuert, um dadurch den Datentransfer zwischen dem Systemspeicher und den genannten E/A-Geräten zu bewirken, dadurch gekennzeichnet, daß die Kommunikationskontrolleinrichtung folgende Merkmale aufweist:

—einen ersten Mikroprozessor (36) zur Steuerung des Empfanges von Daten von der Systembusleitung und der Weiterleitung von Daten auf die Systembusleitung zum Zwecke des Ein- bzw. Auslesens von Daten in/aus den/dem genannten Systemspeicher;

—einen zweiten Mikroprozessor (56) zur Steuering des Empfanges von Daten von der Kommunikationsleitung und der Weiterleitung von Daten auf die Kommunikationsleitung zum Zwecke des Ein- bzw. Auslesens von Daten in die bzw. aus den genannten E/A-Geräte(n);

mindestens eine, in dem adressierbaren Gemainschaftsspeicher (44) vorhandene Mailbox (3), die dem Informationsaustausch zwischen den genannten Mikroprozessoren dient und die einen Speicherplatz (word 2) zur Aufnahme einer Dateneinheit und einen Speicherplatz (F-bit, word 1) für eine Markierung (flag) enthält;

—Verbindungsschaltkreise (34, 68, 42, 46, 74, 54, 70, 48, 72) zur Schaltungsverbindung der ersten und zweiten Mikroprozessoren mit dem genannten Gemainschaftsspeicher, um jedem dieser Mikroprozessoren das Schreiben von Daten und anderen Informationen daraus zu ermöglichen;

—einen, zwischen den ersten und zweiten Mikroprozessor geschalteten Unterbrecherschaltkreis (78), durch den der zweite Mikroprozessor in die Lage versetzt wird, den ersten Mikroprozessor zu unterbrechen;

—einen im zweiten Mikroprozessor enthaltenen Schaltkreis zur Übertragung eines Unterbrechungssignals durch den Unterbrecherschaltkreis, wenn der zweite Mikroprozessor verlangt, daß der erste Mikroprozessor eine Dateneinheit zwischen Systemspeicher und Mailbox überträgt;

—einen im ersten Mikroprozessor enthaltenen Schaltkreis, der auf das genannte Unterbrechungssignal anspricht, um eine Transferoperation einer Dateneinheit zwischen Systemspeicher und Mailbox auszuführen und die genannte Markierung (flag) in einen bestimmten Zustand zu versetzen; und

—wobei der genannte zweite Mikroprozessor diese Markierung von Zeit zu Zeit liest und -im Falle, daß die Zustandslage der genannten Markierung den Abschluß der angesprochenen Aktion durch den ersten Mikroprozessor anzeigt- die Operation beendet, wie es im Vollzuge der Aktion des genannten ersten Mikroprozessors und durch die gesetzte Markierung erforderlich ist.

2. Die Kommunikationskontrolleinrichtung (10) nach Anspruch 1 ist ferner dadurch gekennzeichnet, daß der genannte zweite Mikroprozessor vor Übertragung des Unterbrechungssinals auf die Mailboxinformation zugreift zur Festlegung der Übertragungsrichtung für die genannte Dateneinheit.

## Revendications

1. Système de traitement de données transférant des unités de données entre une mémoire de système (4) et un ensemble de dispositifs d'entrée/sortie (18—24), dans lequel un contrôleur de transmission (10) comprenant une mémoire partagée adressable (44) et couplé à la mémoire de système par un bus de système (16) et aux dispositifs par une ligne de transmission commune (17) commande le transfert des unités de données entre le bus et la ligne afin d'effectuer un transfert des unités de données entre la mémoire de système et les dispositifs, le contrôleur de transmission étant caractérisé par:

un premier microprocesseur (36) servant à commander la réception du et l'émission sur le bus des unités de données pour effectuer une lecture et une écriture dans la mémoire de système;

un second microprocesseur (56) servant à commander la réception de et l'émission sur la ligne de transmission pour une entrée dans les et une sortie des dispositifs;

la mémoire partagée adressable (44) comportant au moins intérieurement une boîte à lettres (boîte à lettres 3) pour valider l'échange d'informations entre les microprocesseurs, la boîte à lettres comprenant un emplacement (mot 2) pour contenir une unité de données et un emplacement (bit F, mot 1) pour in indicateur;

des circuits de couplage (34, 68, 42, 46, 74, 54, 70, 48, 72) couplant les premier et second microprocesseurs à la mémoire partagée pour valider chacun des microprocesseurs pour l'écriture d'unités de données et d'autres informations en provenant;

un circuit d'interruption (78) couplé entre les premier et second microprocesseurs pour valider le second microprocesseur afin d'interrompre le premier microprocesseur;

le second microprocesseur comprenant un circuit pour émettre un signal d'interruption par l'intermédiaire du circuit d'interruption quand le second microprocesseur exige que le premier microprocesseur transfère une unité de données entre la mémoire de système et la boîte à lettres;

le premier microprocesseur comprenant un circuit réagissant au signal d'interruption pour exécuter une opération pour le transfert d'une unité de données entre la mémoire de système et la boîte à lettres et pour la mise de l'indicateur à un état particulier; et

dans lequel le second microprocesseur lit de temps en temps l'indicateur et, quand l'état de l'indicateur indique l'achèvement de la réaction du premier microprocesseur, termine l'opération telle qu'exigée à la suite de l'action du premier microprocesseur telle qu'indiquée par l'indicateur.

2. Contrôleur de transmission selon la revendication 1, caractérisé en ce qu'avant d'émettre le signal d'interruption, le second microprocesseur a accès aux informations de boîte à lettres indiquant la direction du transfert de l'unité de données.

*Fig. 1.*

0 049 158

SYSTEM BUS — 16

| CENTRAL PROCESSING UNIT | 2 |
| COMMUNICATION CONTROLLER | 10 |
| MAIN MEMORY | 4 |
| PERIPHERAL CONTROLLER | 6 |

LINE ADAPTER (RS-232) — 12

CRT — 18

DIALING UNIT — 20

MODEM — 22

LINE ADAPTER (RS-422) — 14

LONG CABLE (4000 FEET)

CRT — 18

TTY — 21

LINE PRINTER — 24

LINE ADAPTER (CURRENT LOOP) — 13

SHORT CABLE (1000 FEET)

CRT — 18

LINE PRINTER — 24

17

COMMUNICATIONS SUBSYSTEM 8

1

Fig. 2.
(sheet 1 of 2)

Fig. 2. (sheet 2 of 2)

Fig. 3. (sheet 1 of 2)

*Fig. 3. (sheet 2 of 2)*

Fig. 4.

0 049 158

INTERPROCESSOR COMMUNICATION MAILBOXES
(ADDRESS LOCATIONS IN SHARED MEMORY 44)

MAILBOX 1 BLOCK MODE COMMANDS

```
                          BIT POSITION
    WORD  0    1    2    3    4    5    6    7
      0 | F    R    -    L    L    L    L    D |
      1 | SHARED MEMORY 44, WORK RAM 52, RAM 60 (MSB) |
      2 | SHARED MEMORY 44, WORK RAM 52, RAM 60 (LSB) |
```

F=1   COMMAND PRESENT - SET BY I/O MICROPROCESSOR 36

F=0   COMMAND COMPLETED - SET BY LINE MICROPROCESSOR 56

R=1   MAIN MEMORY 4 BLOCK READ

R=0   MAIN MEMORY 4 BLOCK WRITE

LLLL  LINE NUMBER (1 OF 16)

D=0   RECEIVE

D=1   TRANSMIT

MAILBOX 2 I/O MICROPROCESSOR 36 COMMANDS TO LINE MICROPROCESSOR 56

```
                          BIT POSITION
    WORD  0    1    2    3    4    5    6    7
      0 |           ACTION CODE             |
      1 | F    -    -    L    L    L    L    D |
      2 |           REASON CODE             |
```

F=1   COMMAND PRESENT - SET BY I/O MICROPROCESSOR 36

F=0   COMMAND COMPLETED - SET BY LINE MICROPROCESSOR 56

ACTION CODE - $00_{16}$ STOP IO

$02_{16}$ CHANNEL INITIALIZE

$04_{16}$ START I/O FROM CPU 2

$06_{16}$ START I/O FROM ALL OTHERS

REASON CODE - BIT 0 CHANNEL REQUEST INTERRUPT

1 DATA SET SCAN

2 TIMER

7 TRANSMIT/RECEIVE (LOGICAL ONE = TRANSMIT CHANNEL/LOGICAL ZERO - RECEIVE CHANNEL)

*Fig. 5. (sheet 1 of 2)*

**0 049 158**

MAILBOX 3 LINE MICROPROCESSOR 56 COMMANDS TO I/O MICROPROCESSOR 36

BIT POSITION

| WORD | 0 | 1 | 2 | 3 | 4 | 5 | 6 | 7 |
|------|---|---|---|---|---|---|---|---|
| 0 | COMMANDS | | | | | | | |
| 1 | F | – | – | L | L | L | L | D |
| 2 | DATA | | | | | | | |
| 3 | COMMANDS | | | | | | | |

F = 1 COMMAND PRESENT - SET BY LINE MICROPROCESSOR 56
F = 0 COMMAND COMPLETED BY I/O MICROPROCESSOR 36

COMMANDS - WORD 0                          WORD 3
          BIT 0 LOAD                       BIT 0 SPECIAL TIMER
          BIT 1 STORE
          BIT 2 GET NEXT BLOCK
          BIT 3 INTERRUPT CPU 2
          BIT 4 BACK SPACE ONE CHARACTER
          BIT 5 TIMER 32
          BIT 6 INITIALIZE
          BIT 7 BACK A LINE

*Fig. 5. (sheet 2 of 2)*

8

```
┌─────────────────────┐
│ COMMUNICATION       │ 200
│ CHANNEL REQUESTS    │
│ ACCESS TO MEMORY 4  │
│ (LREADY-)           │
└─────────────────────┘
          │
          ▼
┌─────────────────────┐
│ LINE MICROPROCESSOR │ 202
│ 56 IS INTERRUPTED AND│
│ BRANCHES TO CHANNEL │
│ SERVICE REQUEST     │
│ PROCEDURE           │
└─────────────────────┘
          │
          ▼
┌─────────────────────┐
│ CHANNEL NUMBER AND  │ 204
│ ACTIVE CCB POINTER  │
│ STORED IN LINE PAGING│
│ LOGIC 54            │
└─────────────────────┘
          │
          ▼
┌─────────────────────┐
│ PAUSE TIMER 62 STARTED│ 210
└─────────────────────┘
          │
          ▼
┌─────────────────────┐
│ ADDRESS STARTING CCP│ 212
│ ADDRESS LOCATION IN │
│ RAM 60              │
└─────────────────────┘
```

*Fig. 6.*
*(sheet 1 of 2)*

RECEIVE 214
- STORE DATA BYTE IN B ACCUMULATOR 218
- STORE 220
- READ WORD 1 OF MAILBOX 3 WHEN F BIT IS ZERO 222
- SET STORE COMMAND IN WORD 0 OF MAILBOX 3 224
- STORE DATA BYTE IN WORD 2 OF MAILBOX 3 226
- STORE CHANNEL NUMBER AND F=1 IN WORD 1 OF MAILBOX 3 228
- I/O MICROPROCESSOR 36 IS INTERRUPTED AND BRANCHES TO THE IRQ INTERRUPT HANDLER PROCEDURE 230
- CCP WAIT 232 → a

TRANSMIT 216
- TEST WORD 1 OF MAILBOX 3 FOR F=0 248
- SET LOAD COMMAND INTO WORD 0 OF MAILBOX 3 250
- STORE CHANNEL NUMBER AND F=1 IN WORD 1 OF MAILBOX 3 252
- I/O MICROPROCESSOR 36 IS INTERRUPTED AND BRANCHES TO THE IRQ INTERRUPT HANDLER ROUTINE 254

I/O MICROPROCESSOR 36
- WAIT FOR DATA BYTE (F=0) 256
- STORE CHANNEL NUMBER AND ACTIVE CCB POINTER IN I/O PAGING LOGIC 34 258
- READ COMMAND WORD FROM MAILBOX 3 AND BRANCH TO DMA READ 260
- SET BUS INTERFACE 30 BUSY 262 → b

9

Fig. 6. (sheet 2 of 2)